# EUROPÄISCHE PATENTSCHRIFT

(11) **EP 1 945 399 B1**
(45) Veröffentlichungstag und Bekanntmachung des Hinweises auf die Patenterteilung: **14.12.2011**
(21) Anmeldenummer: 06806272.8
(22) Anmeldetag: 13.10.2006
(51) Int. Cl.: B23K 20/12, B23K 35/02

(54) **BEFESTIGUNGSELEMENT FÜR EINE REIBSCHWEISSVERBINDUNG**
FASTENING ELEMENT FOR A FRICTION-WELDED JOINT
ELEMENT DE FIXATION POUR LIAISONS SOUDEES PAR FRICTION

(30) Priorität: 09.11.2005 DE 202005017524 U
(43) Veröffentlichungstag der Anmeldung: 23.07.2008
(73) Patentinhaber: EJOT GmbH & Co. KG, 57334 Bad Laasphe (DE)
(72) Erfinder: BIRKELBACH, Ralf, 57334 Bad Laasphe (DE)
(74) Vertreter: Bardehle, Heinz
(86) Internationale Anmeldenummer: PCT/EP2006/009929
(87) Internationale Veröffentlichungsnummer: WO 2007/054178

(56) Entgegenhaltungen:
- EP-A- 1 060 823
- DE-A1- 19 642 331
- DE-A1- 19 802 393
- US-A1- 2003 136 810

## Beschreibung

Die Erfindung bezieht sich auf ein rotationssymmetrisches Befestigungselement mit einer axial zentralen abgerundeten Spitze für eine Reibschweißverbindung mit einem flächigen Bauteil und einer an die Spitze anschließenden kegeligen Mantelfläche, die in eine Hohlkehle zur Aufnahme von beim Reibschweißen geschmolzenen Materials und in eine die Hohlkehle umgebende, gegenüber der Spitze axial zurücktretende und in die Reibschweißverbindung eingehende Schulter übergeht.

Ein derartiges Befestigungselement ist in der Figur 6d der EP 1 250 210 B1 dargestellt. Das Befestigungselement besteht aus einem Stift mit konisch auslaufendem Ende, dessen Spitze abgerundet ist. Die abgerundete Spitze wird zum Reibschweißen auf ein flächiges Bauteil aufgedrückt, bis aufgrund der entstehenden Reibungshitze das Material des Stiftes und gegebenenfalls auch des Bauteils aufschmilzt, woraufhin durch Festhalten des Stiftes die folgende Abkühlung der Reibschweißstelle die Verschweißung mit anschließender Verfestigung erfolgt. Das dabei von der abgerundeten Spitze abgeschmolzene Material wird von einer kalottenförmigen Mulde in den flächigen Bauteil aufgenommen, in die die Spitze zum Reibschweißen gegenüber dem Bauteil unter starkem Andrücken in Drehung versetzt wird.

Eine weitere Ausführungsform eines zum Reibschweißen verwendeten Befestigungselementes ist in den Figuren 1 und 2 der US-PS 6,227,433 B1 offenbart. Hierbei handelt es sich um eine besonders stumpfwinkelige Spitze, die sich beim Reibschweißen in ein flächiges Bauteil versenkt, dieses gegebenenfalls durchdringt und in ein weiteres Bauteil eindringt, womit eine Verbindung zwischen den beiden Bauteilen herbeigeführt wird. Irgendein besonderer Platz für von dem Befestigungselement abgeschmolzenes Material ist dabei nicht vorgesehen.

Weiterhin sei noch auf die DE 196 20 814 A1 verwiesen, in der ein dem Befestigungselement gemäß der vorstehend erläuterten US-PS 6,277,433 ähnliches Befestigungselement mit besonders stumpfen Kegelwinkel auf ein flächiges Bauteil aufgesetzt wird. Durch Reibschweißen infolge Rotation des Befestigungselementes durchdringt dieses schließlich ein flächiges Bauteil und gelangt damit in Kontakt mit einem darunter liegenden flächigen Bauteil, wodurch beide Bauteile miteinander verschweißt werden, wie dies in ähnlicher Weise in der vorstehend genannten US-PS 6,227,433 offenbart ist. Auch beim Gegenstand der DE 196 20 814 A1 ist kein besonderer Freiraum für abgeschmolzenes Material vorgesehen.

Ein mit einer stumpfen Spitze versehener Bolzen ist in der Figur 9 der US-PS 4,850,772 offenbart. Die Spitze stellt nur eine gegenüber der Stirnfläche des Bolzens geringfügige Erhebung dar, so dass beim Reibschweißen die Spitze schnell in ein flächiges Bauteil dringt und danach den Vorgang des Reibschweißens weitgehend der gegenüber der Spitze wesentlich größeren radialen Fläche an der Stirnseite des Befestigungselementes überlässt. In dieser radialen Fläche sind Nuten vorgesehen.

Weiterhin ist aus der DE 198 02 393 A1 einem Reibschweißvorgang dienendes Befestigungselement gemäß dem Oberbegriff des Anspruchs 1 bekannt, das mit einem zentralen Führungselement in eine Positionierbohrung eines flächigen Bauteils eindringen kann. An das Führungselement schließt sich konzentrisch eine Hohlkehle mit einer diese nach außen abschließenden Schulter an, die bei dem Verarbeitungsvorgang des Befestigungselements auf dem flächigen Bauteil aufsitzt und mit diesem schließlich durch Reibschweißen verbunden wird. Dabei kann das Führungselement auch dazu dienen, sich bei dem Reibschweißvorgang eine Durchgangsbohrung in das flächige Bauteil zu bohren.

Die Erfindung liegt die Aufgabe zugrunde, die Reibschweißverbindung in radialer Richtung nach außen hin zu intensivieren. Dies geschieht dadurch, dass zwischen Hohlkehle und Schuler ein im Querschnitt ballig ausgebildeter Ringvorsprung angeordnet ist und zwischen Ringvorsprung und Schulter eine konzentrisch umlaufende Nute angeordnet ist. Der Ringvorsprung wird beim Aufsetzen des Befestigungselementes und dessen Rotation besonders schnell erwärmt und liefert damit in diesem Bereich aufgeschmolzenes Material sowohl des Befestigungselementes als des betreffenden Bauteils, womit radial nach außen hin die Reibschweißverbindung verstärkt wird. Vorteilhaft wird dabei zwischen Ringvorsprung und Schulter eine konzentrisch umlaufende Nut angeordnet. Diese Nut nimmt dann aufgeschmolzenes Material aus dem Ringvorsprung auf und hält dieses für die Reibschweißverbindung fest.

Ein Eindringen der Spitze des Befestigungselementes in ein Bauteil lässt sich dadurch erleichtern, dass die die Spitze umgebende auf die Hohlkehle zulaufende kegelige Mantelfläche in ihrem mittleren Bereich in ihrer axialen Höhe eine konzentrische; wellenförmige Stufe bildet. Die der Spitze zugewandte Seite der wellenförmigen Stufe führt im Bereich der Spitze zu einem schlankeren Kegelwinkel, der einem Eindringen der Spitze in ein Bauteil einen entsprechend geringeren Widerstand entgegen setzt.

Das Befestigungselement lässt sich sowohl als Bolzen als auch als Mutter ausbilden. Beide Gestaltungen sind der Praxis hinsichtlich ihrer Befestigung bei einem flachen Bauteil von großer Bedeutung.

Im Falle der Gestaltung des Befestigungselements als Bolzen bezieht man die Spitze mit ihrer Hohlkehle, den Ringvorsprung und die Schulter in einen am Schaft des Bolzens vorspringenden Radialvorsprung ein, womit sich ein günstig herstellbares, einheitliches Bauelement herstellen lässt.

Eine besondere Möglichkeit der Verschlankung des Kegels im Bereich der Spitze ergibt sich dadurch, dass eine die Spitze unmittelbar umgebende Rille vorgesehen wird, deren äußere Ringwand in die kegelige Mantelfläche übergeht. In diesem Falle erhält man eine besondere schlanke Spitze, die sich dementsprechend leicht in ein Bauteil einfügen lässt.

Um eine zu starke Reibung zwischen einem Bauteil und dem Befestigungselement zu vermeiden, kann man die kegelige Mantelfläche mit einer Mehrzahl von axial verlaufenden Kanten versehen. Damit erhält man im Bereich der kegeligen Mantelfläche eine Art Polygon, das mit seinen axial verlaufenden Kanten nur an wenigen Stellen gegen ein sich in einem Bauteil ausbildendes Loch anlegt, wodurch sich wegen der Reduzierung der Reibung beim Reibschweißen ein entsprechend geringere Wärmebelastung des betreffenden Bauteils ergibt.

In den Figuren sind Ausführungsbeispiele dargestellt. Es zeigen:
- Figur 1: ein nicht erfindungsgemäßes Befestigungselement mit einer Hohlkehle und einer daran anschließenden eben ausgebildeten Schulter;
- Figur 2: ein ähnliches Befestigungselement mit einer gewölbt ausgebildeten Schulter;
- Figur 3: ein erfindungsgemäßes Befestigungselement mit einem zwischen Hohlkehle und Schulter vorgesehenen Ringvorsprung;
- Figur 4: ein Befestigungselement mit einer im Bereich der kegeligen Mantelfläche wellenförmigen Stufe;
- Figur 5: ein Befestigungselement mit einer die Spitze unmittelbar umgebenden Rille;
- Figur 6: eine Abwandlung der Gestaltung gemäß Figur 1 mit in der kegeligen Mantelfläche axial verlaufenden Kanten in einem Querschnitt;
- Figur 7: ein als Mutter ausgebildete Befestigungselement;
- Figur 8: das Befestigungselement gemäß Figur 2, verschweißt mit einem als Platte ausgebildeten flächigen Bauteil.

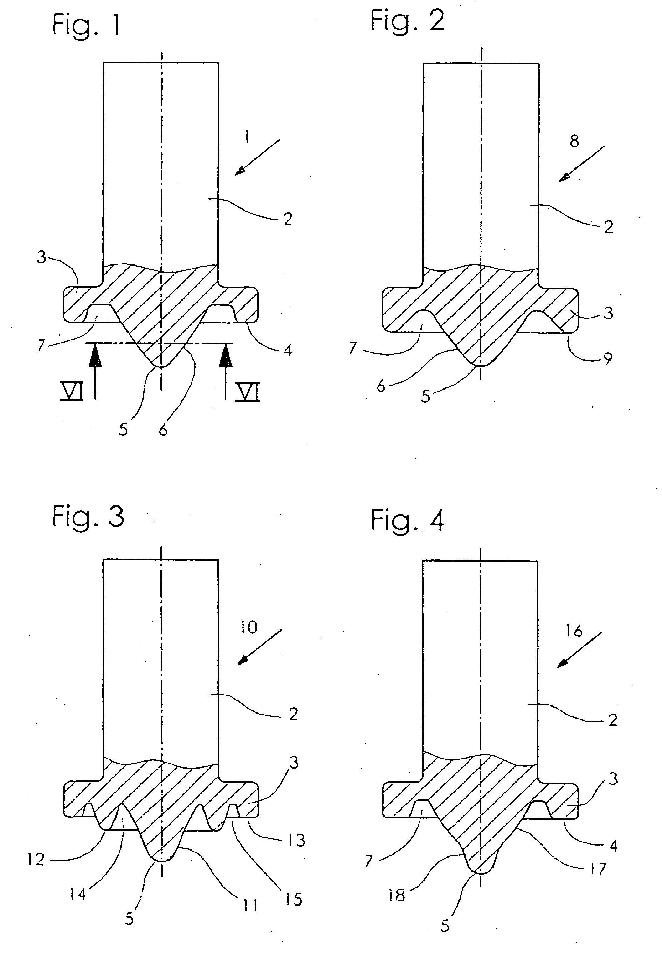

In der Figur 1 ist das rotationssymmetrische Befestigungselement 1 dargestellt, das als Bolzen mit dem Schaft 2 ausgebildet ist. An den Schaft 2 setzt der Radialflansch 3 an, der in seinem äußeren Bereich die eben ausgebildete Schulter 4 bildet und in seiner Mitte die abgerundete Spitze 5 trägt.

Von der Spitze 5 geht die kegelige Mantelfläche 6 aus, die in die Hohlkehle 7 übergeht. Die Hohlkehle 7 befindet somit zwischen dem äußeren Ende der kegeligen Mantelfläche 6 und der Schulter 4. Die Hohlkehle 7 dient zur Aufnahme von beim Reibschweißen geschmolzenen Materials, worauf im Zusammenhang mit Bild 8 näher eingegangen wird.

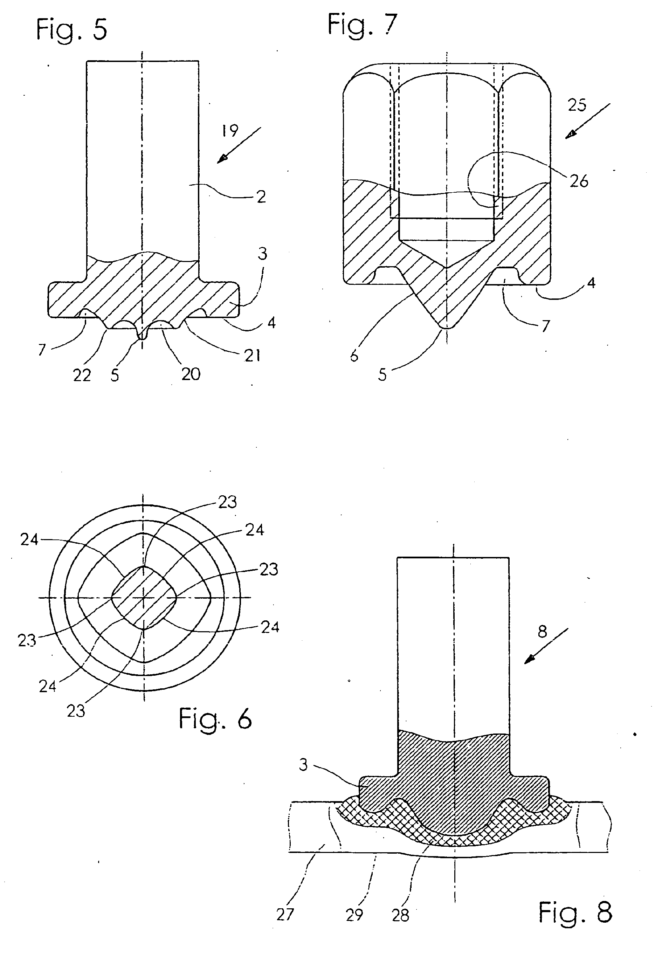

Zum Reibschweißen wird der Schaft 2 in ein entsprechendes Werkzeug eingespannt, das unter Rotation das Befestigungselement 1 gegen ein flächiges Bauteil drückt, womit dieses zuerst mit der abgerundeten Spitze 5 in Berührung gerät, die dabei durch Erhitzung in bekannter Weise zum Schmelzen gebracht wird, womit der Reibschweißvorgang, auf den im Zusammenhang mit der Figur 8 näher eingegangen wird, seinen Anfang nimmt.

In Figur 2 ist ein dem Befestigungselement gemäß Bild 1 weitgehend entsprechendes Befestigungselement 8 dargestellt, bei dem lediglich die Schulter anders gestaltet ist, nämlich als gewölbte Schulter 9.

In Figur 3 ist ein erfindungsgemäßes Befestigungselement 10 dargestellt, bei dem anschließend an die Hohlkehle 14 radial nach außen ein Ringvorsprung 12 angeordnet ist, auf dem nach außen hin die konzentrisch umlaufende Nut 15 folgt. Nach außen hin wird die Nut 15 dann durch die ebene Schulter 13 begrenzt. Nach innen zu geht die Hohlkehle 14 über die kegelige Mantelfläche 11 in die Spitze 5 über.

Beim Aufsetzen des Befestigungselements 10 auf ein flächiges Bauteil wird zunächst die Spitze 5 abgeschmolzen, bis der Ringvorsprung 12 auf das Bauteil auftrifft, womit im äußeren Bereich des Flansches 3 Material aus dem Befestigungselement 10 abgeschmolzen wird, das sich dann sowohl in die Hohlkehle 14 als auch in der Nut 15 sammeln kann, um bei Erstarren eine entsprechend große Erstreckung der Reibschweißverbindung zu bieten.

Bei dem in der Figur 4 dargestellten Befestigungselement 16 ist im Bereich der kegeligen Mantelfläche zwischen Spitze 5 und Hohlkehle 7 eine Besonderheit vorgesehen, nämlich die wellenförmige Stufe 17, die konzentrisch die Spitze 5 umgibt. Aufgrund der Stufe 17 ergibt sich direkt neben der Spitze 5 ein entsprechend steilerer Anstieg der dortigen kegeligen Mantelfläche 18 und damit eine schlanker zulaufende Spitze 5, was in bestimmten Anwendungsfällen von Vorteil ist, insbesondere dann, wenn es besonders auf eine ausgeprägte Selbstzentrierungskraft beim Aufsetzen und Drehen des Befestigungselementes 16 ankommt.

Gemäß Figur 5 handelt es sich um ein Befestigungselement 19, bei dem ebenfalls eine schlankere Spitze 5 gestaltet ist. Um die Spitze 5 ist die Rille 20 dargestellt, die sich eng an die Spitze 5 anschließt, von der aus dann über die kegelige Mantelfläche 21 nach außen hin die Hohlkehle 7 erreicht wird. Bei der Ausführungsform gemäß, Figur 5 dient die Rille 20 nicht nur dazu, die Spitze 5 zu verschlanken, sondern auch dazu, im Bereich um die Spitze 5 dicht herum ein Reservoir für abgeschmolzenes Material in Form der Rille 20 zu schaffen.

Fig. 6 zeigt das Befestigungselement 1 im Radialschnitt gemäß der Linie VI-VI aus Bild 1, das mit vier abgerundeten Kanten 23 im Bereich der kegeligen Mantelfläche (24) zu sehen ist. Aufgrund der sich axial über die kegelige Mantelfläche 24 erstreckenden Kanten ergibt sich beim Aufsetzen und Eindrehen des Befestigungselementes 1 hin ein Bauteil einer geringerer Reibung und damit eine geringere Wärmebelastung des betreffenden Bauteils.

Figur 7 zeigt das Befestigungselement, ausgebildet als Mutter 25. Diese Mutter 25 weist auf ihrer einen Stirnseite eine Gestaltung auf, die derjenigen gemäß Figur 1 vollkommen entspricht, so dass diesbezüglich auf die Figur 1 Bezug genommen werden kann. Die Mutter ist, wie ersichtlich, mit dem Innengewinde 26 versehen.

In Figur 8 ist das Befestigungselement 8 gemäß Bild 2 verschweißt mit der Platte 27 dargestellt. Wie ersichtlich, hat sich eine Reibschweißverbindung 28 (kreuzstraffiert dargestellt) ausgebildet, die sich über die gesamte Stirnseite des Befestigungselementes 8 erstreckt, von dem im Bereich seiner Spitze 5 ein Teil abgeschmolzen ist. Dabei ist die Reibschweißverbindung 28 nicht über die Seite 29 der Platte 27 hindurch getreten, wobei sich aber zwischen der Platte 27 und dem Befestigungselement 8 eine belastungsfähige kräftige Reibschweißverbindung 28 ergeben hat, die sich über die gesamte Stirnseite des Flansches 3 des Befestigungselementes 8 erstreckt.

## Patentansprüche

1. Rotationssymmetrisches Befestigungselement (1, 8, 10, 16, 19, 25) mit einer axial zentralen abgerundeten Spitze (5) für eine Reibschweißverbindung mit einem flächigen Bauteil (27), einer an die Spitze (5) anschließenden kegeligen Mantelfläche (6, 11, 18), die in eine Hohlkehle (7, 14, 15, 20) zur Aufnahme von beim Reibschweißen geschmolzenen Materials übergeht und einer die Hohlkehle (7, 14, 15, 20) umgebende, gegenüber der Spitze (5) axial zurücktretende und in die Reibschweißverbindung eingehende Schulter (4, 9, 13), **dadurch gekennzeichnet, dass** zwischen Hohlkehle (14) und Schulter (13) ein im Querschnitt ballig ausgebildeter Ringvorsprung (12) angeordnet ist und zwischen Ringvorsprung (12) und Schulter (13) eine konzentrisch umlaufende Nute (15) angeordnet ist.

2. Befestigungselement nach Anspruch 1 **dadurch gekennzeichnet, dass** die die Spitze (5) umgebende, auf die Hohlkehle (7) zulaufende kegelige Mantelfläche (18) in ihrem mittleren Bereich ihrer axialen Höhe eine konzentrische, wellenförmige Stufe (17) bildet.

3. Befestigungselement nach einem der Ansprüche 1 oder 2, **gekennzeichnet durch** eine die Spitze (5) unmittelbar umgebende Rille (20), deren äußere Ringwand in die kegelige Mantelfläche (21) übergeht.

4. Befestigungselement nach einem der Ansprüche 1 bis 3, **dadurch gekennzeichnet, dass** die kegelige Mantelfläche (6, 11 , 18, 21, 24) eine Mehrzahl von axial verlaufenden Kanten (23) aufweist.

5. Befestigungselement nach einem der Ansprüche 1 bis 4, **gekennzeichnet durch** eine Ausbildung als Bolzen (1, 8, 10, 16, 19).

6. Befestigungselement nach einem der Ansprüche 1 bis 5, **gekennzeichnet durch** eine Ausbildung als Mutter (25).

7. Befestigungselement nach Anspruch 5, **dadurch gekennzeichnet, dass** die Spitze (5) mit ihrer Hohlkehle (7), dem Ringvorsprung (22) und der Schulter (4) Bestandteile eines am Schaft (2) des Bolzens vorspringenden Radialflansches (3) sind.

## Claims

1. Rotationally symmetrical fastening element (1, 8 10, 16, 19, 25) having an axial, central, rounded tip (5) for a friction-welded connection with a two-dimensional part (27), a cone shaped outer surface (16, 11, 18) adjacent to the tip (5) and comprising a cut-out (7, 14, 15, 20) for taking up material melted upon friction-welding, and a shoulder (4, 9, 13) surrounding the cut-out (7, 14, 15, 20), retraced with respect to the tip (5) and merging into the friction-welding connection **characterized in that**, in between the cut-out (14) and the shoulder (13), a ring projection being convex in cross-section, is arranged and **in that**, in between the ring projection (12) and the shoulder (13), a concentrically shaped circumferential groove (15) is arranged.

2. Fastening element according to claim 1, **characterized in that** the conical outer surface (18) surrounding the tip (5) and extending to the cut-out (7), forms, in its middle area of its axial height, a concentrical, wave shape step (17).

3. Fastening element according to one of the claims 1 or 2, **characterized by** a notch (20) immediately surrounding the tip (5), the outer ring wall of the notch merging into the conical outer surface (21).

4. Fastening element according to one of the claims 1 to 3, **characterized in that** the conical outer surface (6, 11, 18, 21, 24) comprises a plurality of axially extending edges (23).

5. Fastening element according to one of the claims 1 to 4, **characterized by** being formed as bolt (1, 8, 10, 16, 19).

6. Fastening element according to one of the claims 1 to 5, **characterized by** being in form of a nut (25).

7. Fastening element according to claim 5, **characterized in that** the tip (5) with its cut-out (7), the ring projection (22) and the shoulder (4) is part of a radial flange (3) which is projecting from a shaft (2) of the bolt.

## Revendications

1. Elément de fixation à symétrie de révolution (1, 8, 10, 16, 19, 25) avec une pointe arrondie (5) centrée axialement pour une liaison de soudage par friction avec un composant plat (27), une surface d'enveloppe conique (6, 11, 18) se joignant à la pointe (5), qui passe dans une cannelure (7, 14, 15, 20) pour la réception du matériel fondu lors du soudage par friction et une épaule (13) encerclant la cannelure (7, 14, 15, 20) reculant axialement par rapport à la pointe (5) et entrant dans la liaison de soudage par friction, **caractérisé en ce qu'**entre cannelure (14) et épaule (13), un rebord annulaire (12) formé de manière convexe est placé dans la section et une rainure (15) périphérique concentrique est placée entre rebord annulaire (12) et épaule (13).

2. Elément de fixation selon revendication 1, **caractérisé en ce que** la surface d'enveloppe (18) conique encerclant la pointe (5), allant en direction de la cannelure (7), forme un niveau (17) ondulé dans la zone intermédiaire de sa hauteur axiale.

3. Elément de fixation selon l'une des revendications 1 ou 2, **caractérisé par** une rainure (20) encerclant directement la pointe (5), dont la paroi annulaire extérieure passe dans la surface d'enveloppe conique (21).

4. Elément de fixation selon l'une des revendications 1 à 3, **caractérisé en ce que** la surface d'enveloppe conique (6, 11, 18, 21, 24) présente une multitude d'arêtes (23) s'étendant axialement.

5. Elément de fixation selon l'une des revendications 1 à 4, **caractérisé par** une formation en tant que boulons (1, 8, 10, 16, 19).

6. Elément de fixation selon l'une des revendications 1 à 5, **caractérisé par** une formation en tant qu'écrou (25).

7. Elément de fixation selon revendication 5, **caractérisé en ce que** la pointe (5) avec sa cannelure (7), le rebord annulaire (22) et l'épaule (4) sont des composants d'un collet radial en saillie (3) sur le tronc (2) du boulon.
